**Europäisches Patentamt**

**European Patent Office**

**Office européen des brevets**

(19)

(11) Veröffentlichungsnummer : **0 374 375 B1**

## EUROPÄISCHE PATENTSCHRIFT

(12)

(45) Veröffentlichungstag der Patentschrift :
**11.11.92 Patentblatt 92/46**

(51) Int. Cl.$^5$ : **F16D 65/04**

(21) Anmeldenummer : **89116610.0**

(22) Anmeldetag : **08.09.89**

(54) **Bremsklotz.**

(30) Priorität : **23.11.88 DE 3839477**

(43) Veröffentlichungstag der Anmeldung :
**27.06.90 Patentblatt 90/26**

(45) Bekanntmachung des Hinweises auf die
Patenterteilung :
**11.11.92 Patentblatt 92/46**

(84) Benannte Vertragsstaaten :
**DE FR GB IT**

(56) Entgegenhaltungen :
**EP-A- 0 180 555**
**DE-A- 2 219 669**

(56) Entgegenhaltungen :
**DE-A- 2 602 798**
**DE-A- 3 415 994**
**DE-A- 3 803 069**
**DE-U- 8 426 713**
**DE-U- 8 527 259**

(73) Patentinhaber : **ALFRED TEVES GmbH**
**Guerickestrasse 7 Postfach 90 01 20**
**W-6000 Frankfurt am Main 90 (DE)**

(72) Erfinder : **Betzer, Rolf-Dieter**
**Am Ritterhof 41**
**W-6236 Eschborn (DE)**

(74) Vertreter : **Portwich, Peter**
**c/o ALFRED TEVES GMBH Guerickestrasse 7**
**W-6000 Frankfurt/Main 90 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Bremsklotz für eine Teilbelag-Scheibenbremse, sowie einen Bremsschacht zur Führung eines derartigen Bremsklotzes.

Bei der Führung von Bremsklötzen in Bremsbewegungsrichtung in dem zugehörigen Schacht der Bremse können eine Reihe von Schwierigkeiten auftreten. Wird zum einen die Bremse sehr lange nicht betätigt, so können die Bremsklötze im Schacht korrodieren, so daß sie sich nur sehr schwer bewegen lassen. Eine derartige Korrosion kann nicht nur durch Oxydation, sondern auch durch elektrolytische Vorgänge ausgelöst werden, wenn die den Bremsbelag tragende Trägerplatte und der Schacht zur Führung des Bremsklotzes aus unterschiedlichen Metallen bestehen. Dies ist beispielsweise dann der Fall, wenn aus Gewichtsgründen der Bremssattel aus Aluminium gegossen wurde, während die in dem Schacht des Aluminiumsattels geführte Trägerplatte des Bremsklotzes aus Eisen besteht. Bremssattel aus Aluminium haben zwar den Vorteil eines sehr geringen Gewichtes. Gegenüber dem Material der Trägerplatte ist darüber hinaus aber auch der Aluminiumschacht verhältnismäßig weich, so daß trotz Behandlung der Schachtoberfläche der Schacht durch die Trägerplatte verhältnismäßig leicht verletzt werden kann, so daß sich auch hierdurch Schwierigkeiten bei der Führung der Trägerplatte im Schacht ergeben können.

Um den beschriebenen Schwierigkeiten abzuhelfen, werden die Schachtflächen mit Schachtblechen ausgekleidet, welche in ihrer Oberflächenbehandlung, ihrer Festigkeit und ihrem Material im wesentlichen an die Trägerplatte der Bremsklötze angepaßt waren. Derartige Schachtbleche haben aber den Nachteil, daß sich zum einen wegen des zusätzlich notwendigen Bauteils die Toleranzen erhöhen, zum anderen aufgrund einer Korrosion zwischen Schachtwand und Schachtblech die Schachtabmessungen sich verändern können, so daß eine leichte und sichere Führung der Trägerplatte im Schacht nicht mehr gewährleistet ist. Hinzukommt, daß die zwischen Schachtwand und Schachtblech sich ansammelnden Korrosionsprodukte auch nicht selbsttätig entfernt werden können, weil keine Relativbewegung zwischen der Schachtwand und dem Blech stattfindet. Aus der Hauptanmeldung P 38 03 069 ist ein Abdeckbauteil bekannt, das auf dem Bremsklotz aufsitzt und mit Metallflächen eine direkte Anlage des Reibklotzes an eine Schachtwand der Teilbelag-Scheibenbremse verhindert, um die genannten Nachteile zu beseitigen.

Im Zusammenhang mit der DE-OS 26 02 798 ist es bekannt, zur Lärmdämpfung bei Bremsklötzen diese mit einem Abdeckblech zu versehen, in Verbindung mit zusätzlichen lärmdämmenden Schichten, die beim Bremsen unangenehme Quietschfrequenzen hinreichend bedämpfen. Um die Bleche auswechseln zu können, greifen diese elastisch um die Trägerplatte, so daß sie relativ leicht wieder gelöst werden können.

Weiterhin ist es aus dem DE-Gbm G 84 26 713.5 bekannt, daß derartige Abdeckbleche auch um die seitlichen Flächen der Trägerplatte des Bremsklotzes greifen können, um die geräuschdämpfenden Bleche fest auf der Trägerplatte zu halten.

Die vorliegende Erfindung geht daher aus von einem Bremsklotz der in dem Oberbegriff des Hauptanspruches beschriebenen Gattung und hat sich zur Aufgabe gestellt, die Führung derartiger Bremsklötze im Bremsschacht zu verbessern, insbesondere auch für den Fall, daß der Bremsschacht aus einem anderen Metall besteht, als die Trägerplatten der Bremsklötze. Insbesondere soll das Abdeckbauteil einen definierten Sitz auf dem Belagträger erhalten.

Die Aufgabe wird durch die sich aus dem kennzeichnenden Teil des Hauptanspruchs ergebende Merkmalskombination gelöst. Die Erfindung besteht im Prinzip also darin, das Abdeckbauteil mit einer Lasche zu versehen, um das Abdeckbauteil radial in eine vorgegebene Position zu bringen. Damit ist gewährleistet, daß die Fenster des Abdeckbauteils und die Öffnungen der Belagträgerplatte in Deckung zueinander gebracht sind, so daß die Belaghaltestifte mühelos durch beide Öffnungen hindurchgeführt werden können.

Die Lasche weist einen Laschenabschnitt auf, der auf der reibbelagfreien Seite der Trägerplatte angeordnet ist. Damit ist das Abdeckbauteil axial festgelegt, so daß sich bei Bremsbetätigen und Erhitzen des Bremsklotzes und bei Rüttelbewegungen das Abdeckbauteil nicht in axialer Richtung zur Bremsscheibe hin bewegen und ausdehnen kann.

Die Lasche läßt sich mit einem ihrer Abschnitte federnd auf der Trägerplatte montieren, so daß dazu nur ein Arbeitsvorgang notwendig ist.

Eine Vertiefung auf der reibbelagfreien Seite verhindert vorteilhaft, daß das Abdeckbauteil mit seiner Lasche axial hervorsteht und Manschetten oder Dichtungen bzw. den Kolben verletzt.

In einer vorteilhaften Ausgestaltung der Erfindung weist das Abdeckbauteil zwei Laschen auf, die symmetrisch und mittig angeordnet sind. Da sich das Abdeckbauteil während eines Bremsvorganges durch die Erhitzung in der Mitte der Trägerplatte am weitesten in axialer Richtung ausdehnen würde, sind die Laschen mittig angeordnet. In einer einfachen Ausgestaltung der Erfindung sind die Laschen symmetrisch angeordnet. Durch die mittige Anordnung greifen die Laschen auch nicht in die außen liegenden Fenster der Trägerplatte ein.

Vorteilhaft sind die Laschen auf einer Umfangsfläche der Trägerplatte angeordnet, die im Bereich der Laschen eine zu der Umfangskraft tangentiale, senkrecht auf der Symmetrieachse stehende Ebene bildet. Damit können die Laschen senkrecht zu dem übrigen Abdeckbauteil und mit ihren Laschenabschnitten parallel zueinander umgebogen werden.

Nachfolgend ist ein Ausführungsbeispiel der Erfindung anhand von Zeichnungen näher erläutert.

Es zeigen

Fig. 1 ein Abdeckbauteil in Frontansicht,

Fig. 2 das Abdeckbauteil nach Fig. 1 in Draufsicht,

Fig. 3 das Abdeckbauteil nach Fig. 1 in geschnittener Darstellung und Seitenansicht,

Fig. 4 das Abdeckbauteil nach Fig. 1 in Verbindung mit einem Bremsklotz in Frontansicht,

Fig. 5 das Abdeckbauteil nach Fig. 1 an einem Bremsklotz in geschnittener Darstellung und Seitenansicht

Fig. 6 das Abdeckbauteil nach Fig. 1 an einem Bremsklotz in Draufsicht,

Fig. 7 das Abdeckbauteil nach Fig. 1 an einem Bremsklotz in Rückansicht und

Fig. 8 eine Teilbelag-Scheibenbremse, in deren Schacht ein Bremsklotz mit einem Abdeckbauteil geführt ist.

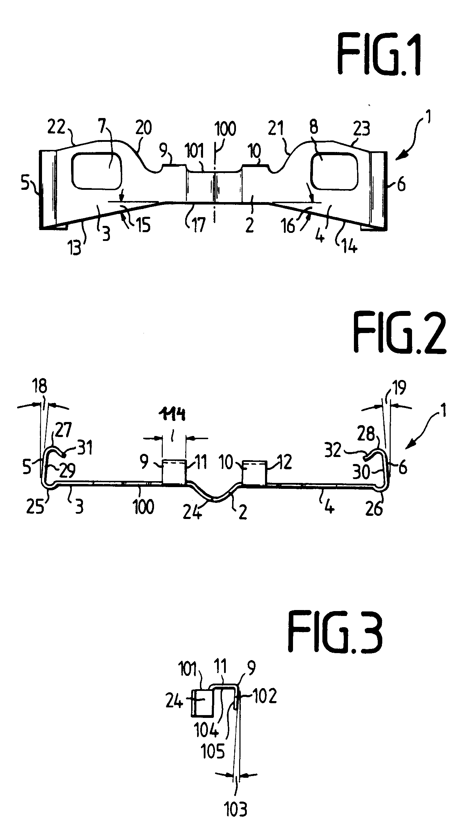

Fig. 1 bis 3 zeigen ein Abdeckbauteil 1 mit einem mittleren Abschnitt 2 und zwei ersten seitlichen Abschnitten 3,4, im folgenden Flügel genannt. An den Flügeln 3,4 sind an dem mittleren Abschnitt 2 Metallflächen 5,6, im folgenden zweite seitliche Abschnitte 5,6 genannt, gegenüberliegend angeordnet. Die Flügel 3,4 weisen Fenster 7,8 auf. Der mittlere Abschnitt 2 weist zwei Laschen 9,10 auf. Die Flügel 3,4 verjüngen sich zum mittleren Abschnitt 2 hin bzw. verbreitern sich in Richtung der seitlichen Abschnitte 5,6. Der mittlere Abschnitt 2 weist in etwa eine Rechteckform auf. Untere Kanten 13,14 der Flügel 3,4 verlaufen unter einem Winkel 15,16 von etwa 12° zur unteren Kante 17 des mittleren Abschnitts 2. Ein oberer Rand weist zwei S-förmige Kanten 20,21 und zwei zu den unteren Kanten 13,14 etwa parallele Kanten 22,23 auf. Im Bereich des mittleren Abschnittes 2 ist eine halbkreisförmige Brücke 24 angeordnet. An dem mittleren Abschnitt 2 schließen sich nahtlos die Flügel 3,4 an, die in Flucht zueinander stehen. Die seitlichen Abschnitte 5,6 weisen halbkreisförmige Vorsprünge 25 bis 28, Seitenwände 29,30 und Endabschnitte 31,32 auf. Die Seitenwände 29,30, die die Basisbereiche bilden, stehen etwa senkrecht unter Winkel 18,19 von 5° nach innen geneigt. Der Winkel dient dazu, daß das Abdeckbauteil 1 mit Vorspannung auf einer Belagträgerplatte aufsetzbar ist. Ausgehend von der Brücke 24 des mittleren Abschnittes 2 schließen sich übergangslos die Flügel 3,4 an. Es folgen die halbkreisförmigen Vorsprünge 25,26, die in die Seitenwände 29,30 übergehen. An den Seitenwänden 29,30 schließen sich die halbkreisförmigen Vorsprünge 27, 28 und an diese die Endabschnitte 31,32 an. Neben der Brücke 24 sind zwei Laschen 9,10 mit zwei ersten Laschenabschnitten 11,12 angeordnet. Die ersten Laschenabschnitte 11,12 erstrecken sich von dem oberen radial äußeren Rand 101 und stehen senkrecht auf dem mittleren Abschnitt 2. Aufgrund der Symmetrieanordnung des Abdeckbauteils 1 zu einer Symmetrieachse 100 wird im folgenden nur noch eine der Laschen 9,10 näher beschrieben. Von dem ersten Abschnitt 11 erstreckt sich ein zweiter Laschenabschnitt 102 gleicher Breite 114, der im wesentlichen senkrecht auf dem ersten Laschenabschnitt 11 steht und im wesentlichen parallel zu dem mittleren Abschnitt 2 angeordnet ist.

Der zweite Laschenabschnitt 102 ist unter einem Winkel 103 von etwa 2° gegenüber dem mittleren Abschnitt 2 geneigt. Die Laschenabschnitte 11 und 102 weisen innere Flächen 104 und 105 auf.

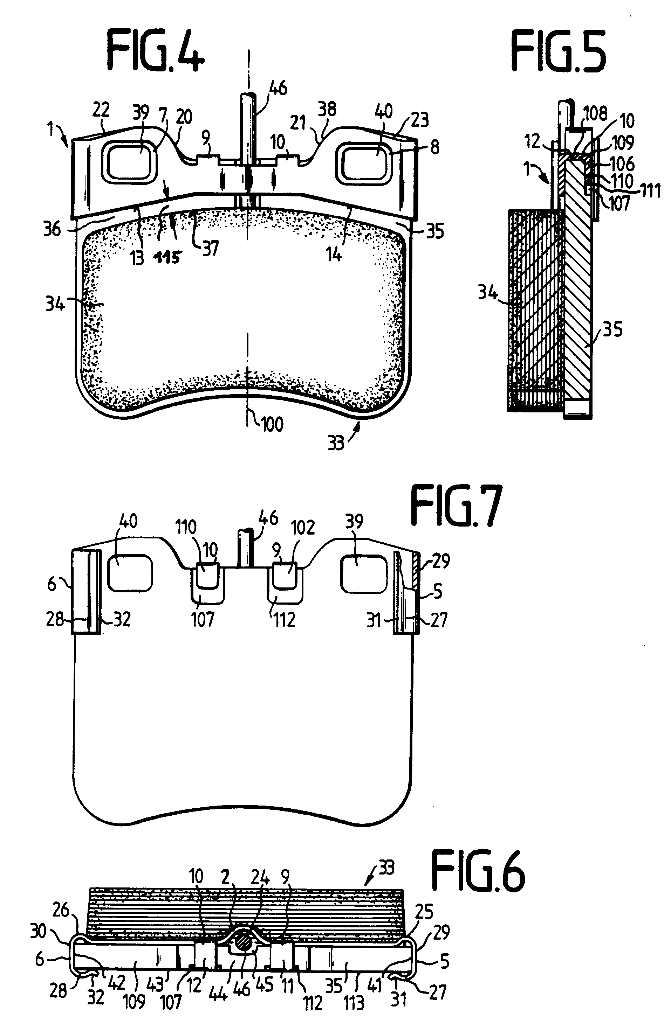

Fig. 4 zeigt einen Bremsklotz 33, im folgenden Bremsbelag genannt, mit einem Reibbelag 34, der auf einer Trägerplatte 35 angeordnet ist. In einem oberen reibbelagfreien Abschnitt 36 der Trägerplatte 35 ist das Abdeckbauteil 1 angeordnet. Die Kanten 13,14 des Abdeckbauteiles 1 passen sich einer abgerundeten Kante 37 des Reibbelages 34 an und sind mit einem Abstand 115 zu dieser Kante 37 angeordnet. Die S-förmigen Kanten 20,21 und die parallelen Kanten 22,23 des Abdeckbauteiles 1 passen sich dem Verlauf einer Kante 38 der Trägerplatte 35 an. Die Trägerplatte 35 weist Durchgangsöffnungen 39,40 auf, im folgenden Fenster genannnt, die eine geringere Größe als die Fenster 7,8 des Abdeckbauteiles 1 aufweisen, aber kongruent zu diesen Fenstern 7,8 sind. Die Fenster 7,8 des Abdeckbauteiles 1 und die Fenster 39,40 der Trägerplatte 35 sind bei auf der Trägerplatte 35 aufgesetztem Abdeckbauteil 1 etwa zur Deckung gebracht.

Fig. 5 zeigt in Schnittdarstellung den Bremsbelag 33 mit dem Reibbelag 34 und der Trägerplatte 35 und darauf aufgesetzt das Abdeckbauteil 1. Die Lasche 10 ist mit ihren Abschnitten 12 und 106 hakenförmig gebogen und greift mit ihrem Abschnitt 106 in eine Vertiefung 107 der Trägerplatte 35. Eine Laschenfläche 108 des Abschnitts 12 liegt auf einer radial äußeren Umfangsfläche 109 der Trägerplatte 35 auf, wobei sich der Begriff "radial außen" auf eine Radachse eines Kraftfahrzeuges bezieht, stützt sich daran ab, und die Laschenfläche 110 liegt an der Vertiefungsfläche 111 an. Der mittlere Abschnitt 2 und die Lasche 9 bilden somit eine rechteckförmige Klammer, die einen radial äußeren Rand der Trägerplatte 35 unter Vorspannung federnd umgreift und das Abdeckbauteil 1 rutschfest auf der Trägerplatte 35 hält. Durch das Aufliegen der Fläche 108 auf die Umfangsfläche 109 ist eine Lage des Abdeckbauteiles 1 in der Trägerplatte 35 definiert, also das Abdeckbauteil 1 auf dem Bremsbelag 33 positioniert.

Fig. 6 und 7 zeigen die Trägerplatte 35 mit dem Abdeckbauteil 1. Die seitlichen Abschnitte 5,6 des Abdeckbauteiles 1 umgreifen mit ihren halbkreisförmigen Abschnitten 25 bis 28 federnd die Trägerplatte 35. Dabei liegen die Seitenwände 29,30 der Abdeckplatte 1 parallel an Stirnflächen 41,42, im folgenden Seitenwände genannt, der Trägerplatte 35 an. Die Seitenwände 41,42 der Trägerplatte 35 stehen etwa senkrecht auf der Drehrichtung der Bremsscheibe, sind also scheibenein- und scheibenauslaufseitig angeordnet. Die Endabschnitte 31,32 stützen sich an der reibbelagfreien Seite 43, im folgenden Rückseite genannt, der Trägerplatte 35 ab. Die Trägerplatte 35 weist in ihrem mittleren Abschnitt 44 eine Ausnehmung 45 auf. Zusammen mit der Brücke 24 des Abdeckbauteiles 1 bildet die Ausnehmung 45 eine etwa kreisförmige Öffnung, die zur Aufnahme einer elektrischen Leitung 46 dient. Die elektrische Leitung 46 dient zur Anzeige einer Belagabnutzung. Weiterhin hat das Abdeckbauteil die Möglichkeit, sich bei einem Aufpressen auf die Trägerplatte 35 im Bereich der Brücke 24 dort als Toleranzausgleich zu verformen. Das Abdeckbauteil 1 greift mit seinen Laschen 9,10 über die Trägerplatte 35. Da bei liegen die Laschenflächen 104 and 108 der Laschenabschnitte 11 und 12 auf der Umfangsfläche 109 der Trägerplatte 35 auf. Die Laschenabschnitte 102 und 106 sind so in den Vertiefungen 107 und 112 der Trägerplatte 35 angeordnet, daß die Laschen 9 und 10 nicht über eine Rückseitenfläche 113 hervorstehen.

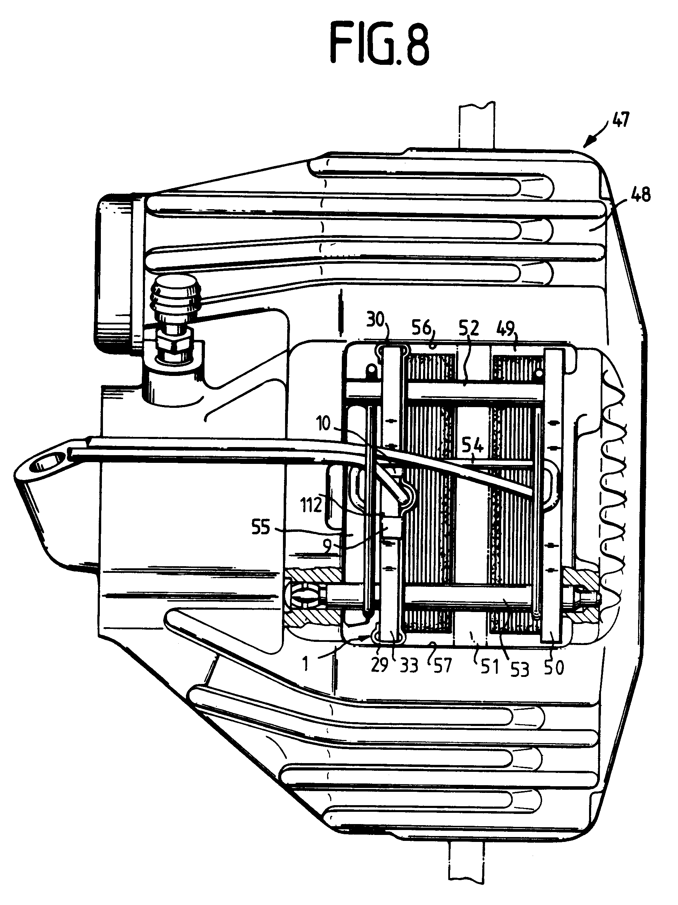

Fig. 8 zeigt eine Teilbelag-Scheibenbremse 47 mit einem aus Aluminium gegossenen Faustsattel 48 in Draufsicht. In einem Schacht 49 des Sattels 48 sind die Bremsbeläge 33 und 50 angeordnet. Zwischen den Bremsbelägen 33,50 rotiert eine Bremsscheibe 51. Die Bremsbeläge 33,50 werden von Stiften 52,53 in dem Schacht 49 gehalten und von einer Feder 54 geräuschmindernd auf die Stifte 52,53 gedrückt. Die Stifte 52,53 führen durch die Fenster 7,8 des Abdeckbauteiles 1 und die Fenster 39,40 der Trägerplatte 35. Bei einem Bremsvorgang fährt ein Kolben 55 einer Kolbenzylindereinheit 55 gegen den Bremsbelag 33 und drückt diesen gegen die Bremsscheibe 51. Mit Hilfe einer Reaktionskraft wird der Bremsbelag 50 über den Sattel 48 von der anderen Seite her gegen die Bremsscheibe 51 gezogen. Bei Bremsvorgängen tritt ein Belagverschleiß auf, so daß die Trägerplatte 35 des Bremsbelages 33 mit dem Abdeckbauteil 1, im folgenden Belag-Gleitblech genannt, entlang der Schachtwände 56,57 bewegt wird. Das Belag-Gleitblech 1 ist vorteilhaft ein Edelstahl- oder ein nichtrostendes Blech und verhindert dauerhaft mit seinen Seitenwänden 29,30, die zwischen der Trägerplatte 35 und den Schachtwänden 56,57 angeordnet sind, eine Korrosion, ein Festsetzen oder ein Festrosten zwischen Trägerplatte 35 des Bremsbelages 33 und den Schachtwänden 56,57. Das Belag-Gleitblech 1 ist nicht an der Trägerplatte 35 des Bremsbelages 50 vorgesehen, weil der Bremsbelag 50 keine Relativbewegung zu den Schachtwänden 56,57 durchführt. Die Endabschnitte 31,32 sind vorteilhaft auf der Rückseite 43, also der reibbelagfreien Seite der Trägerplatte 35 angeordnet, weil somit der mittlere Abschnitt 2 und die Flügel 3,4 des Belag-Gleitbleches 1 und die Kolbenzylindereinheit der Teilbelag-Scheibenbremse einander nicht hinderlich sind. Die halbkreisförmigen Vorsprünge 25 - 28 verbessern die Gleiteigenschaften des Bremsbelages im Schacht.

Eventuelle Korrosionsprodukte zwischen Belag-Gleitblech 1 und Belagträger 35 sind leicht entfernbar und führen äußerstenfalls zum Austausch der Beläge 33,50. Dies bewirkt einen ggf. wesentlich geringeren Reparaturaufwand.

Das Belag-Gleitblech 1 kann sowohl auf dem faustseitigen als auch auf dem kolbenseitigen Belag 33,50 montiert werden. Im gezeigten Fall wird jedoch nur der kolbenseitige Belag mit einem Belag-Gleitblech bestückt. Der faustseitige Belag 50 ist um die doppelte Blechstärke breiter ausgeführt.

Bezugszeichenliste

1 Abdeckbauteil
2 mittlerer Abschnitt
3 Flügel
4 Flügel
5 seitlicher Abschnitt
6 seitlicher Abschnitt
7 Fenster
8 Fenster
9 Lasche
10 Lasche
11 erster Laschenabschnit
12 erster Laschenabschnitt
13 untere Kante
14 untere Kante
15 Winkel
16 Winkel
17 Kante
18 Winkel
19 Winkel
20 s-förmige Kante
21 s-förmige Kante
22 obere Kante
23 obere Kante
24 Brücke
25 halbkreisförmiger Vorsprung
26 halbkreisförmiger Vorsprung
27 halbkreisförmiger Vorsprung
28 halbkreisförmiger Vorsprung
29 Seitenwand
30 Seitenwand
31 Endabschnitt
32 Endabschnitt
33 Bremsbelag
34 Reibbelag
35 Trägerplatte
36 reibbelagfreier Abschnitt
37 Reibbelagkante
38 Trägerplattenkante
39 Fenster

40 Fenster
41 Seitenwand
42 Seitenwand
43 Rückseite
44 mittlerer Abschnitt
45 Ausnehmung
46 elektrische Leitung
47 Teilbelag-Scheibenbremse
48 Faustsattel
49 Schacht
50 Bremsbelag
51 Bremsscheibe
52 Haltestift
53 Haltestift
54 Feder
55 Kolben
56 Schachtwand
57 Schachtwand
100 Symmetrieachse
101 oberer Rand
102 zweiter Laschenabschnitt
103 Winkel
104 Fläche
105 Fläche
106 Laschenabschnitt
107 Vertiefung
108 Laschenfläche
109 Umfangsfläche
110 Laschenfläche
111 Vertiefungsfläche
112 Vertiefung
113 Rückseitenfläche
114 Breite
115 Abstand

**Patentansprüche**

1. Bremsklotz für eine Teilbelagscheibenbremse (47), bei welchem über den die Reibkraft der Bremse auf die Schachtwand des Gehäuses (56,57) übertragenden Seitenflächen der Trägerplatte (41,42) ein Abdeckbauteil (1) angeordnet und mit der Trägerplatte (35) verbunden ist, wobei das Abdeckbauteil (1) mit seitlichen Abschnitten (5,6) unmittelbar an den Seitenflächen (41,42) anliegt und sich über den gesamten Bereich der Seitenflächen (41,42) erstreckt, welcher die aus der Reibkraft der Bremse resultierenden Kräfte auf das Gehäuse der Bremse (48) überträgt, dadurch **gekennzeichnet**, daß das Abdeckbauteil (1) eine oder mehrere Laschen (9,10) aufweist, die es an einer radial äußeren Umfangsfläche (109) der Trägerplatte (35) abstützen, daß das Abdeckbauteil (1) sich im wesentlichen auf der Reibbelagseite der Trägerplatte (35) befindet, wobei eine oder mehrere Laschen (9,10) die radial äußere Umfangsfläche (109) umgreifen, und daß das Abddeckbauteil (1) durch die Laschenabschnitte (102,110) auf der reibbelagfreien Seite (43) der Trägerplatte (35) in axialer Richtung federnd verklemmt wird.

2. Bremsklotz nach Anspruch 1, dadurch **gekennzeichnet,** daß die Trägerplatte (35) auf ihrer reibbelagfreien Seite (43) eine Vertiefung (107,112) aufweist, in die der Laschenabschnitt (102,110) hineinragt.

3. Bremsklotz nach einem der vorhergehenden Ansprüche, dadurch **gekennzeichnet**, daß das Abdeckbauteil (1) zwei Laschen (9,10) aufweist, die symmetrisch zu einer Symmetrieachse (100) angeordnet sind.

4. Bremsklotz nach einem der vorhergehenden Ansprüche, dadurch **gekennzeichnet**, daß beide Laschen (9,10) mittig in der Nähe der Symmetrieachse (100) angeordnet sind.

5. Bremsklotz nach einem der vorhergehenden Ansprüche, dadurch **gekennzeichnet**, daß die Umfangsfläche (109) der Trägerplatte (35) im Bereich der Laschen (9,10) eine senkrecht auf der Symmetrieachse stehende Ebene bildet.

**Claims**

1. Brake shoe for a spot-type disc brake (47), wherein a cover element (1) is arranged above the lateral surfaces of the carrier plate (41, 42) which transmit the friction force of the brake onto the aperture wall of the housing (56, 57), the said cover element (1) with lateral portions (5, 6) abutting directly on the lateral surfaces (41, 42) and extending over the entire area of the lateral surfaces (41, 42), which area transmits the forces resulting from the friction force of the brake onto the housing of the brake (48), **characterised** in that the cover element (1) comprises one lug or a plurality of lugs (9, 10) which support it on a radially outward circumferential surface (109) of the carrier plate (35), in that the cover plate (1) is arranged substantially on the friction lining side of the carrier plate (35), with one lug or a plurality of lugs (9, 10) embracing the radially outward circumferential surface (109), and in that the cover element (1) is resiliently clamped in axial direction by the lug portions (102, 110) on the side (43) of the carrier plate (35) on which no friction lining is applied.

2. Brake shoe as claimed in claim 1, **characterised** in that the carrier plate (35) contains an indentation (107, 112) on its side (43) devoid of friction lining into which the lug portion (102, 110) is projecting.

3. Brake shoe as claimed in any one of the preceding claims,
   **characterised** in that the cover element (1) comprises two lugs (9, 10) which are arranged symmetrically to an axis of symmetry (100).

4. Brake shoe as claimed in any one of the preceding claims,
   **characterised** in that both lugs (9, 10) are arranged centrically in the vicinity of the axis of symmetry (100).

5. Brake shoe as claimed in any one of the preceding claims,
   **characterised** in that the circumferential surface (109) of the carrier plate (35) in the area of the lugs (9, 10) forms a plane disposed vertically on the axis of symmetry.

**Revendications**

1. Garniture de frein pour un frein à disque à garnitures partielles (47), dans laquelle une pièce de recouvrement (1) est disposée sur les faces latérales (41, 42) de la plaque support qui transmettent les efforts de friction du frein aux parois (56, 57) d'un puits de l'étrier et est reliée à la plaque support (35), la pièce de recouvrement (1) s'appliquant directement contre les faces latérales (41, 42) par des parties latérales (5, 6) et s'étendant sur toute la région des faces latérales (41, 42) qui transmet à l'étrier (48) du frein les forces résultant des efforts de friction du frein, caractérisée en ce que la pièce de recouvrement (1) comporte une ou plusieurs pattes (9, 10) qui la sollicitent en appui contre une face périphérique radialement extérieure (109) de la plaque support (35), en ce que la pièce de recouvrement (1) se trouve essentiellement sur la face de la plaque support (35) qui porte la garniture de friction, une ou plusieurs pattes (9, 10) s'engageant autour de la face périphérique radialement extérieure (109), et en ce que la pièce de recouvrement (1) est bloquée élastiquement, par les parties de pattes (102, 110), en direction axiale sur la face (43) de la plaque support (35) qui est dépourvue de garniture de friction.

2. Garniture de frein selon la revendication 1, caractérisée en ce que la plaque support (35) présente, sur sa face (43) dépourvue de garniture de friction, un renfoncement (107, 112) dans lequel pénètre une partie de patte (102, 110).

3. Garniture de frein selon l'une quelconque des revendications précédentes, caractérisée en ce que la pièce de recouvrement (1) comporte deux pattes (9, 10), qui sont disposées symétriquement par rapport à un axe de symétrie (100).

4. Garniture de frein selon l'une quelconque des revendications précédentes, caractérisée en ce que les deux pattes (9, 10) sont agencées au centre au voisinage de l'axe de symétrie (100).

5. Garniture de frein selon l'une quelconque des revendications précédentes, caractérisée en ce que la face périphérique (109) de la plaque support (35) forme, dans la région des pattes (9, 10), un plan qui s'étend perpendiculairement à l'axe de symétrie.

# FIG.1

# FIG.2

# FIG.3

7

# FIG.4

# FIG.5

# FIG.7

# FIG.6

# FIG.8